# FASCICULE DE BREVET EUROPEEN

(11) **EP 1 040 670 B1**
(45) Date de publication et mention de la délivrance du brevet: **13.03.2002**
(21) Numéro de dépôt: 98959977.4
(22) Date de dépôt: 14.12.1998
(51) Int. Cl.: H04N 17/00

(54) **PROCEDE ET SYSTEME DE MESURE DE LA QUALITE DE SIGNAUX DE TELEVISION NUMERIQUE**
VERFAHREN UND SYSTEM ZUM MESSEN DER QUALITÄT VON DIGITALEN FERNSEHSIGNALEN
METHOD AND SYSTEM FOR MEASURING THE QUALITY OF DIGITAL TELEVISION SIGNALS

(30) Priorité: 17.12.1997 FR 9716003
(43) Date de publication de la demande: 04.10.2000
(73) Titulaire: TELEDIFFUSION DE FRANCE, 75015 Paris (FR)
(72) Inventeur: GOUDEZEUNE, Gabriel, F-57070 Metz (FR); BAINA, Jamal, F-54000 Nancy (FR); HOCQUARD, Philippe, F-54510 Tomblaine (FR); MASSE, Denis, F-57780 Rosselange (FR)
(74) Mandataire: Jacquard, Philippe Jean-Luc
(86) Numéro de dépôt international: FR9802717
(87) Numéro de publication internationale: WO9931891

(56) Documents cités:
- EP-A- 0 624 983
- EP-A- 0 786 883
- WO-A-95/33338
- US-A- 5 473 385
- US-A- 5 600 632
- US-A- 5 699 392
- SCHULMAN M. A.: "END-TO-END PERFORMANCE MEASUREMENT FOR INTERACTIVE MULTIMEDIA TELEVISION" PROCEEDINGS OF THE INTERNATIONAL TEST CONFERENCE (ITC) , WASHINGTON , OCTOBER 21-25 , 1995, pages 979-985, XP000552905

## Description

La présente invention a pour objet un procédé et un système de mesure de la qualité de signaux de télévision numérique, et qui est plus particulièrement destiné à la gestion de la qualité de service d'un réseau de distribution de signaux audiovisuels numériques.

Pour superviser efficacement un réseau de distribution, il convient d'exploiter des mesures de la qualité de différents signaux dans le réseau, ces signaux permettant le transport et la diffusion de signaux audiovisuels.

Le document SCHULMAN M. A.: "END-TO-END PERFORMANCE MEASUREMENT FOR INTERACTIVE MULTIMEDIA TELEVISION" PROCEEDINGS OF THE INTERNATIONAL TEST CONFERENCE (ITC) , WASHINGTON , OCTOBER 21-25 , 1995, pages 979-985, XP000552905, décrit un système d'analyse de réseau pour la télévision numérique dans lequel le passage d'événements, c.à.d. de paquets de données, est analysé en différents points du réseau. Les événements peuvent représenter des données d'image vidéo ou bien des signaux de commande tels que "pause", "avance rapide", etc. Les informations analysées concernent la taille des paquets de données ainsi que le moment de leur passage en un point donné. Ces moments sont déterminés par rapport à une trace temporelle (time stamp) obtenue à chaque point d'analyse par une horloge locale. Les horloges à chaque point d'analyse sont synchronisées entre elles. Les résultats des analyses sont finalement téléchargés sur une base de donnée centrale.

Le document US - A - 5 600 632 décrit un système similaire à celui du document précédent, dans lequel plusieurs analyseurs sont répartis sur le réseau et analysent les traces temporelles de paquets de données transmis. Pour ce faire, chaque analyseur comporte une horloge synchronisée avec celles des autres analyseurs.

La présente invention a pour objet un procédé et un système permettant de réaliser une telle supervision, sans apporter de complication supplémentaire, et sans avoir à tenir compte de caractéristiques propres aux systèmes numériques, par exemple la caractéristique du système MPEG2 selon laquelle les images d'une séquence ne sont pas transmises dans l'ordre où elles seront vues sur un écran (on transmet en effet les images I, puis les images P et enfin les images B d'un groupe d'images GOP).

L'idée de base de l'invention est d'utiliser un signal temporel de référence présent dans le flux de données pour étiqueter les mesures.

L'invention concerne ainsi un procédé de mesure de la qualité de signaux de télévision numérique comportant un flux de données, ledit procédé comportant la réalisation de signaux de mesure représentatifs de la qualité d'au moins certaines des données du flux de données, comportant les étapes suivantes :
a) sélectionner dans le flux de données un signal temporel de référence ;
b) générer à partir du signal temporel de référence un signal d'horloge numérique multibits dont la phase est asservie à partir dudit signal temporel de référence et dont le compte est déduit de manière univoque de celui d'une base temporelle générée lors de l'encodage initial des signaux de télévision numérique ;
c) étiqueter lesdits signaux de mesure à l'aide au moins de certains bits du signal d'horloge numérique, significatifs pour la nature des mesures effectuées.

L'étape a comporte avantageusement les sous-étapes suivantes :
a₁) sélectionner dans le flux de données des trames correspondant à des données vidéo spécifiques associées à un programme ;
a₂) sélectionner dans lesdites trames ledit signal temporel de référence.

Les signaux de télévision numérique sont par exemple selon le standard MPEG-2 et lors de l'étape a₁, la sélection des trames s'effectue à partir du champ PID.

Les données vidéo spécifiques sont de préférence celles pour lesquelles sont effectuées des mesures de qualité audio et/ou vidéo. Dans ce cas, le procédé peut comporter une étape de décodage des données vidéo spécifiques à partir de trames sélectionnées à partir du champ PID.

La sélection du signal temporel de référence peut s'effectuer en testant un drapeau de présence du signal temporel de référence dans chaque trame considérée.

Pour les signaux de télévision numérique selon le standard MPEG-2, le signal temporel de référence peut être le signal PCR, le signal SCR, le signal DTS ou bien encore le signal PTS. Lors de l'étape b, ledit signal d'horloge numérique présente avantageusement une fréquence de k x 27MHz, k étant un nombre entier ou fractionnaire non nul.

L'invention concerne également un système de la mesure de qualité des signaux dans un réseau de télévision numérique comportant une pluralité d'installations de transmission, comportant une pluralité d'équipements de mesure associés à au moins certaines installations de transmission, chacun comprenant :
- un dispositif d'identification recevant à une entrée le flux de données et produisant en sortie un signal temporel de référence sélectionné dans le flux de données ;
- un générateur d'horloge dont la phase est asservie à partir dudit signal temporel de référence et produisant en sortie un signal d'horloge numérique multibits cadencé à une fréquence donnée et dont le compte est déduit de manière univoque de celui d'une base temporelle générée lors de l'encodage des signaux de télévision numérique ;
- un dispositif d'étiquetage des mesures de qualité à l'aide au moins de bits significatifs du signal d'horloge numérique ;
- un dispositif de transmission des mesures de qualité étiquetées ;
- et en ce qu'il comporte un récepteur destiné à collecter des données de mesure étiquetées transmises par ledit dispositif de transmission.

Le compte du signal d'horloge numérique multibits est de préférence égal à celui de ladite base temporelle.

La procédure d'étiquetage selon l'invention permet de comparer des mesures effectuées sur les mêmes données en divers points du réseau, sans que la reconnaissance des données soit affectée par les temps de propagation dûs à la transmission et/ou au codage et/ou au décodage.

D'autres caractéristiques et avantages de l'invention apparaitront mieux à la lecture de la description qui va suivre, donnée à titre d'exempte non limitatif, en liaison avec les dessins ci-annexés, dans lesquels :
- la figure 1 est un diagramme illustrant un contrôle en entrée et en fin de chaîne d'un réseau de télévision numérique,
- la figure 2 est un exemple de "tableau de bord" d'un système de supervision selon l'invention,
- la figure 3 représente un exemple de système de mesure selon l'invention,
- la figure 4 est un diagramme fonctionnel d'un dispositif mettant en oeuvre le procédé selon l'invention,
- la figure 5 représente un mode de réalisation du dispositif de la figure 4,
- la figure 6 représente un mode de réalisation préféré du dispositif de la figure 5,
- la figure 7 illustre la boucle à verrouillage de phase du module SSTC.

La norme MPEG2 [ISO/IEC 13818-1] expose la façon de combiner un ou plusieurs flux élémentaires ("elementary stream") de vidéo, d'audio et de données, en un flux adapté à la transmission ou au stockage. Cette norme fournit les informations suffisantes et nécessaires pour synchroniser la présentation en sortie d'un décodeur des signaux vidéo et audio, et pour s'assurer que les mémoires tampons ou les buffeurs du décodeur ne se vident pas ou ne se saturent pas. Ces informations sont en fait des marques temporelles ("time-stamps") concernant le décodage et la présentation des signaux vidéo et audio, et des marques temporelles concernant la fourniture du flux binaire lui-même.

Le modèle temporel décrit dans la norme est un modèle assurant un délai constant. Ce dernier est le retard entre l'entrée d'un signal dans l'encodeur et sa sortie du décodeur. Il est dû à l'encodage, aux "buffeurs" du décodeur ainsi qu'à la présentation en sortie du décodeur. Ainsi, chaque image et chaque échantillon audio est présenté une et une seule fois. De cette manière l'intervalle séparant deux images reste fixe. Par ailleurs, la fréquence d'échantillonnage du signal audio est la même à l'entrée de l'encodeur et à la sortie du décodeur.

La fonction des marques temporelles est d'assurer que le délai est constant et que les signaux vidéo et audio en sortie du décodeur sont synchronisés. Elles représentent en fait un compteur s'incrémentant à chaque coup d'une horloge constituant la base temporelle ("System Time Clock" ou STC à 27MHz dans la norme).

Le délai constant et la synchronisation des signaux vidéo et audio en sortie du décodeur peuvent être obtenus lorsque les encodeurs sauvegardent les marques temporelles. C'est le cas quant celles-ci sont transmises au décodeur avec les signaux associés, et que le décodeur les utilise pour réguler temporellement la présentation des signaux à sa sortie.

Les principales marques temporelles sont :
- SCR ("System Clock Reference") pour le flux de programme ("Program Stream") et PCR ("Program Clock Reference") pour le flux de transport ("Transport Stream").

Ces marques encodent en fait la base temporelle utilisée pour les DTS et les PTS vidéo et audio (définis ci-dessous) d'un même programme.

La base temporelle STC est un compteur de 42 bits représentant une horloge cadencée à 27 Mhz, et les marques temporelles sont codées sur 33+9 bits.

Le SCR ou le PCR servent à régénérer dans le décodeur une base temporelle STC' qui peut être la même base temporelle STC que lors de l'encodage ou qui s'en déduit de manière univoque, pour assurer un délai constant
- DTS ("Decoding Time-Stamp") : cette marque temporelle indique l'instant de présentation en entrée du décodeur d'un bloc de signal codé ("Access Unit" ou AU). La base temporelle est l'horloge précédente divisée par 300 (ce qui donne une horloge cadencée à 90 Khz), et cette marque temporelle est codée sur 33 bits
- PTS ("Presentation Time-Stamp") : cette marque temporelle indique l'instant de présentation en sortie du décodeur d'un bloc de signal décodé ("Présentation Unit"). La base temporelle est la même horloge que pour les DTS (horloge cadencée à 90 Khz), et cette marque temporelle est codée sur 33 bits. Le PTS doit être présent dans chaque PES au moins toutes les 0,7 seconde et il se situe dans l'en-tête de paquet ("packet header") PES.

Il faut bien noter que les signaux PTS et les DTS représentent des marques temporelles relatives à la base temporelle STC. Elles ne correspondent pas à une heure absolue (c'est-à-dire qu'elles n'indiquent ni l'heure de l'encodage, ni l'heure du décodage).

La présente invention se propose d'exploiter les données temporelles présentes dans un flux de transport numérique multi-programmes MPTS, par exemple selon le système MPEG 2, pour superviser les équipements de mesure, notamment de la qualité des signaux audiovisuels, en étiquetant les mesures effectuées, de manière à permettre le collationnement des mesures effectuées sur les mêmes signaux en divers points du réseau.

On réalise ainsi une "datation" des signaux audio-visuels qui permet de les reconnaître en tout point du réseau quelque soit le retard temporel introduit par la transmission, le codage et/ou le décodage des données, et ce même dans le cas de mise en cascade des équipements de transmission. Cette "datation" qui identifie la "date", au sens large, d'un événement, permet ainsi de mettre en correspondance les différentes mesures relatives à des mêmes signaux, et donc en particulier de suivre la qualité des signaux transmis par la tête de réseau tout le long de la chaîne de transmission. Ceci permet également de positionner dans le temps et de caractériser un événement, tel qu'une perturbation, par son impact sur les signaux audiovisuels tels qu'ils sont mesurés sur le réseau. Cette datation participe donc d'une connaissance précise de la qualité globale du service de diffusion audiovisuelle sur le réseau.

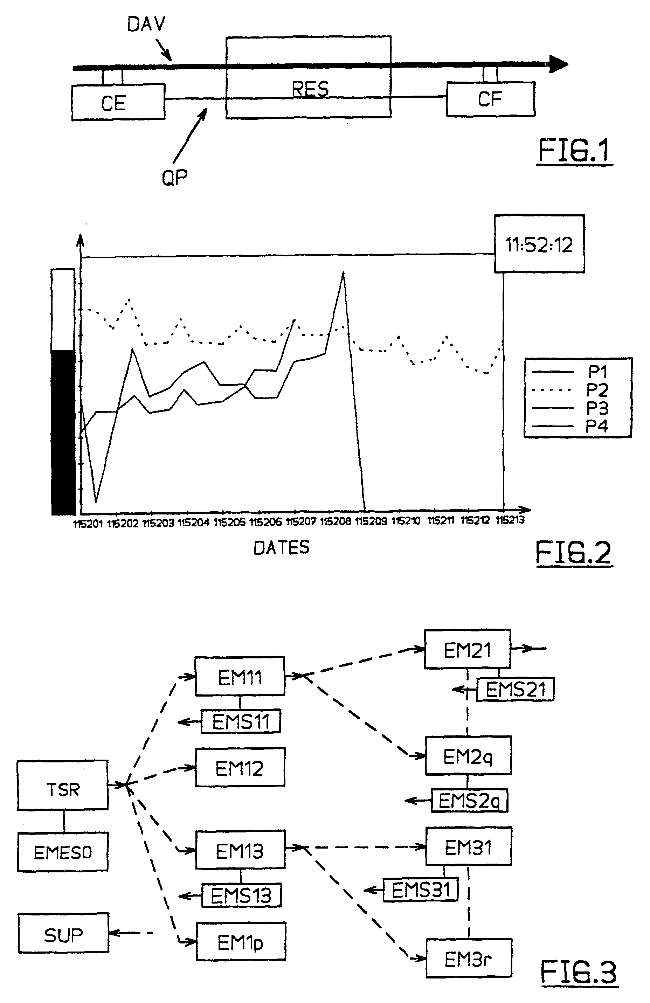

La figure 2 présente un exemple de tableau de bord d'un système de supervision. Selon l'invention il existe une horloge unifiée de datation liée aux signaux MPEG2. Cette caractéristique avantageuse participe à l'automatisation de la gestion de la qualité de service sur les réseaux de télévision numériques (P1 à P4 : exemple de 4 mesures).

Certaines mesures de qualité sont comparatives, afin d'évaluer, par exemple, la transparence de tout ou partie du réseau. Elles mettent en oeuvre la réalisation et la comparaison de deux mesures à des endroits différents du réseau. Par exemple, pour qualifier objectivement la qualité audio et vidéo, il est nécessaire, pour certaines approches, de faire une comparaison. Cette opération est par exemple réalisée entre des mesures effectuées en début de la transmission et d'autres réalisées au niveau de la fin du lien de transmisssion concerné. Les mesures sont effectuées respectivement au niveau d'un équipement de mesure assurant le contrôle en entrée (CE) et d'un équipement de mesure assurant le contrôle final (CF) (fig.1) d'un réseau RES de télévision numérique, transmettant des données audio-vidéo DAV. Un canal auxiliaire retransmet dans un sens et/ou dans l'autre entre les équipements CE et CF les paramètres de qualité QP mesurés afin de permettre leur comparaison.

Cette approche impose une synchronisation temporelle précise entre les mesures effectuées en entrée et celles réalisées en sortie. Il convient par conséquent de s'assurer de la véracité de l'information de datation concernant chaque mesure.

Pour répondre à cet effet, le procédé proposé par la présente invention permet l'affectation d'informations de datation à des mesures effectuées sur le réseau. La comparaison est par conséquent consolidée et rendue robuste par cette synchronisation. Il suffit de mettre en correspondance les informations de datation.

Ceci s'applique bien entendu au cas de mesures effectuées en tout point d'un réseau que ce soit un réseau terrestre, un réseau câblé ou bien encore un réseau par satellites.

La figure 3 représente un réseau mettant en oeuvre des transmissions en cascade à partir d'une tête de réseau TRS. Le réseau présente un premier niveau d'émetteurs EM11 ... EM1p qui reçoivent les signaux fournis par la tête de réseau TRS et que certains retransmettent à des émetteurs de second niveau par exemple EM21 ... EM29, ou bien EM31 ... EM36, et ainsi de suite. A certains émetteurs, par exemple EM11, EM13, EM21, EM31..., sont associés des équipements de mesure respectivement EMS11, EMS13, EMS21, EMS31. L'émetteur TRS de tête de réseau peut présenter également un équipement de mesure EMSO. Une installation de supervision SUP, par exemple localisée en tête du réseau, reçoit les signaux de mesure transmis par les différents équipements de mesure EMS précités, la datation des informations de mesure de qualité étant réalisée selon l'invention. Il est alors possible de comparer entre elles les mesures réalisées sur les mêmes données, par mise en correspondance des informations de datation et de suivre la qualité en tout point du réseau où celà s'avère utile.

Selon l'invention, on décode le flux MPEG2-TS pour en extraire des informations de datation ("time-stamp") liées aux signaux audiovisuels. Chaque mesure réalisée par un équipement de métrologie est affectée par une marque temporelle qui lui est associée de manière définitive. Ce couple (Datation, Mesure de Qualité) est destiné à être exploité par les autres systèmes de métrologie et par le système de supervision.

L'idée de base de l'invention est d'utiliser un horodateur à partir du contenu du flux de données par exemple MPEG2. Plusieurs possibilités de données incluses dans le flux de données ont déjà été présentées. Elles constituent des exemples de références temporelles exploitables dans le cadre de la présente invention.

L'association avantageuse des dates ou des indications temporelles et des paramètres de qualité (associées à une identification de l'équipement de mesure) permet leur transmission à d'autres équipements de mesure ainsi qu'à un système de supervision SUP. Ces données sont effectivement exploitables pour des fins de métrologie. Les mesures associées à la datation de leur exécution contribuent également à l'analyse des incidents et aux décisions concernant la qualité du service de diffusion audiovisuelle.

Le système de supervision est un outil de contrôle du réseau au sens surveillance et correction, mais il peut également renfermer une base de données de métrologie. Ces informations permettent d'avoir un historique des incidents survenus et qui ont affecté la qualité du service de distribution des signaux audiovisuels. Cette connaissance permet également de confronter les mesures effectuées sur les signaux, qui sont issues des différents niveaux du réseau. Par ailleurs, lesdits signaux peuvent prendre des formes diverses : signaux radio fréquence, données numériques codées et multiplexées, et/ou échantillons du signal en bande de base, etc ...

Par ailleurs, les équipements de métrologie comparative positionnés au niveau du contrôle final effectuent la synchronisation entre les mesures de référence et les mesures finales. Cette opération est réalisée à l'aide des données de datation. Les mesures et leurs datations associées permettent d'assurer une synchronisation permettant la mise en oeuvre de méthodes de mesure comparatives.

L'invention consiste à décoder le flux de données, par exemple MPEG2-TS, pour en extraire une information de marquage temporel "time stamp" MTS pour effectuer une datation des mesures des équipements de métrologie de qualité, par exemple audio et vidéo, en télévision numérique.

Dans le cas du standard MPEG-2, on utilise avantageusement le champ P.C.R. ou bien SCR contenu dans le flux MPEG2-TS ou bien encore le champ DTS ou PTS.

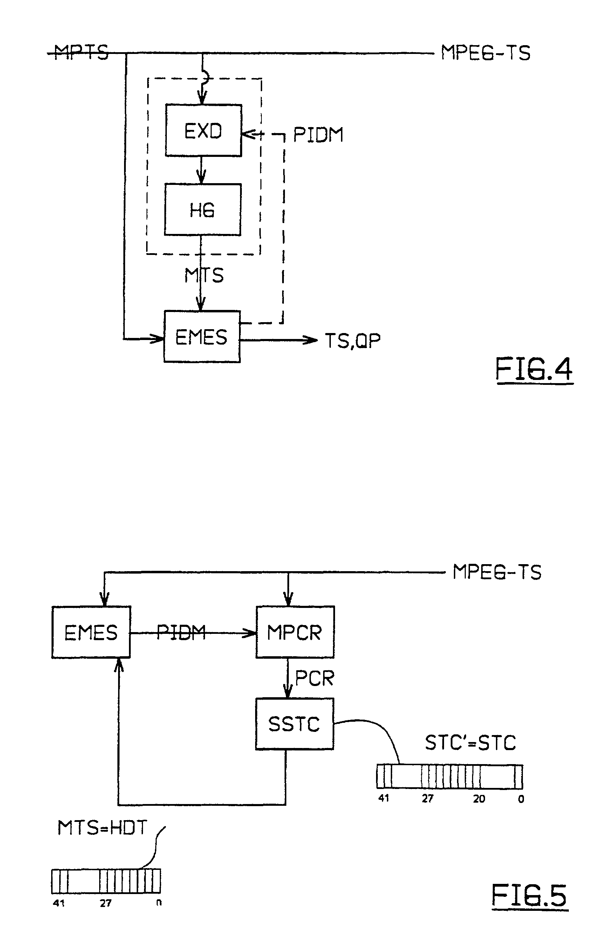

L'équipement s'insère comme représenté à la figure 4 dans un réseau de télévision numérique.

Un extracteur de données EXD reçoit le flux de transport multiprogrammes MPEG-TS, ainsi qu'éventuellement un signal PIDM représentant l'indicatif PID de trames à sélectionner, le signal PIDM étant généré par l'équipement de mesure EMES.

L'équipement de mesure EMES comporte en particulier un analyseur audio et vidéo qui traite les signaux audiovisuels en bande de base et effectue des mesures de qualité sur ces dits signaux, de manière à produire en sortie des signaux QP représentant la qualité des signaux tels que mesurés par l'équipement considéré EMES.

L'extracteur de données EXD décode un champ contenu dans le flux de données, et le module de génération d'horloge HG produit un signal d'horloge TS multibits qui est utilisé pour la datation des signaux de mesure QP.

Le flux MPEG2-TS dispose d'informations temporelles sur l'estampillage des données numériques. Le champ PCR contenu dans les trames MPEG2-TS permet en particulier de réaliser le marquage temporel des données. A partir du PCR, le STC est par exemple généré. C'est un compteur STC' de marquage temporel des données, qui présente un compteur de 42 bits représentant une horloge à 27 Mhz. L'équipement décode le flux MPEG2-TS et marque les données mesurées par l'équipement de mesure EMES à l'aide de ce compteur d'horodatage.

Selon un mode de réalisation de l'invention, on décode le flux MPEG2-TS pour en extraire le PCR et synthétiser le STC sous forme d'un signal STC' = STC. On remarquera que les installations de transmission incorporent des décodeurs, mais dans celles-ci, les données intermédiaires de décodage restent internes et ne sont pas accessibles. Cette donnée STC permet de créer une information appelée MTS ("time-stamp"). Cette opération permet dans des équipements de métrologie de qualité AUDIO et/ou VIDEO, d'effectuer l'indexation à l'aide du signal MTS des paramètres de qualité mesurés.

La trame MPEG2-TS ("transport-stream") comporte plusieurs types d'information. Une trame MPEG2-TS comprend 188 octets dans lesquels existent plusieurs champs particuliers qui permettent à un décodeur MPEG2 de retrouver les informations utiles.

Afin d'identifier un programme donné, le champ PID ("Packet Identifier") est disponible sur 13 bits.

Le dispositif peut intégrer un module d'identification d'un PID spécifique, de préférence celui des données vidéo associées au programme pour lequel sont effectuées des mesures de qualité audio et vidéo.

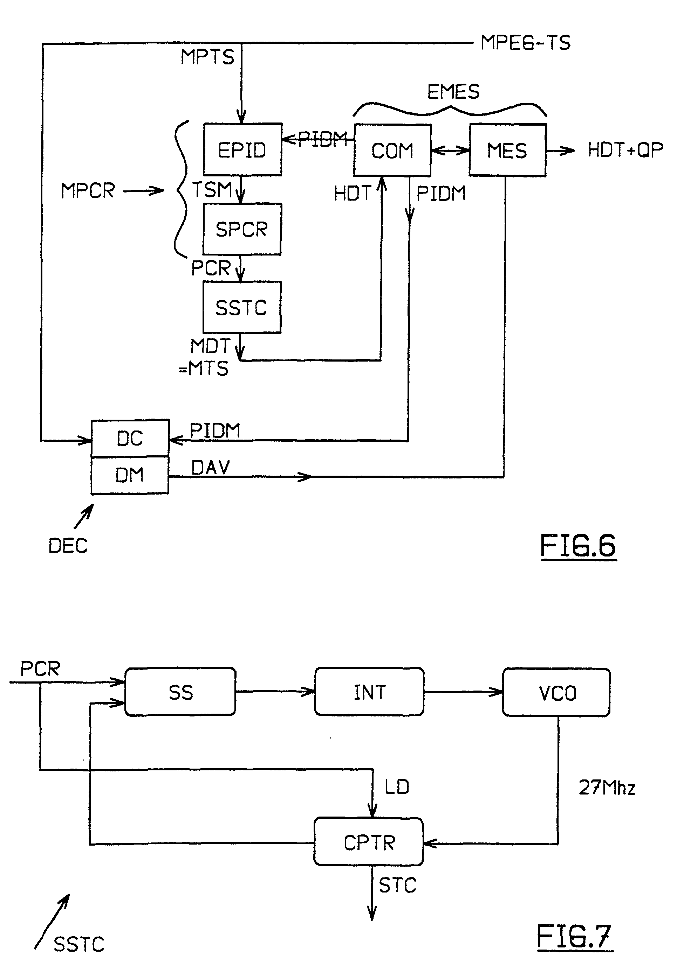

Comme représenté à la figure 5, le générateur de marque temporelle MTS comporte deux modules fonctionnels.
- Un extracteur de données MPCR qui permet de récupérer dans le flux MPEG-TS les trames de 188 octets associés au PIDM requis par l'équipement de mesure EMES, et de générer le champ PCR (ou SCR) à partir des trames ainsi récupérées.
- Un module SSTC de génération d'horloge qui génère le signal STC' sur 42 bits à partir du signal PCR, comme décrit plus loin en référence à la figure 7.

De préférence, le signal MTS est un signal HDT qui est obtenu en ne conservant du signal STC' que les bits significatifs utiles, à savoir les bits bₙ à b₄₁. bₙ est choisi en fonction de la périodicité des mesures à effectuer, par exemple pour les mesures de qualité effectuées toutes les secondes, on peut ne conserver que les bits b₂₅ à b₄₁, car le bit b₂₅ du signal STC' = STC change toutes les 0,73 sec.

Le champ PCR occupe 42 bits à l'intérieur des trames (33 bits de base, 6 bits de réservé, 9 bits d'extension). L'extracteur MPCR du signal PCR teste dans un premier lieu le drapeau de présence de PCR dans chaque trame considérée et en extrait l'information sur 42 bits. Cette information représente un rafraîchissement de l'horloge numérique interne aux codeurs et décodeurs et qui est cadencée à la fréquence de 27 Mhz. L'information PCR n'est pas régulière dans le flux de données. En effet, la norme MPEG2 impose que le temps séparant deux trames contenant une information PCR ne soit pas supérieure à 100ms, mais ceci ne présente pas d'inconvénient particulier étant donné que ce signal sert seulement à effectuer un calage de phase du signal STC.

Comme représenté à la figure 6, le module MPCR comporte un sous-module EPID qui démodule le flux MPEG-TS et génère en sortie les trames TSM sélectionnées en fonction du PIDM, et un sous-module SPCR. A ces trames, le sous-module SPCR applique un filtre qui détecte les drapeaux indiquant la présence du signal PCR qui est restitué en sortie du sous-module SPCR. Le décodeur DEC comporte un sous-module DC assurant la fonction de décodage proprement dit et un sous-module DM qui génère les données DAV. Le sous-module décodeur DC reçoit également le signal PIDM pour sélectionner les trames sur lesquelles la mesure doit être effectuée dans le cas préféré où celles-ci sont identiques à celles qui sont sélectionnées pour la restitution du signal STC. L'équipement de mesure comporte un sous-module de communication COM et un sous-module de mesure MES. Le sous-module COM fournit le signal PIDM aux sous-modules EPID et DC, il reçoit le signal MTS et il le transmet aux sous-modules de mesure MES. A partir des trames sélectionnées sur la base du signal PIDM, le sous-module DM du décodeur fournit les données audio-vidéo DAV en bande de base au sous-module de mesure MES qui produit en sortie des signaux de mesure QP qui identifient l'équipement de mesure particulier EMES et qui sont également étiquetés à l'aide du signal HDT (= MTS).

Pour piloter les équipements de mesure de qualité audio et vidéo, on génère un signal d'horloge STC stable à 27 Mhz. Pour synthétiser le STC cadencé par l'horloge à 27 Mhz comptatible avec la norme MPEG2, le module représenté à la figure 7 permet à partir des valeurs de PCR et d'une boucle d'asservissement (VCO) de la phase d'une horloge à la fréquence de 27 Mhz, de générer le signal STC'. Le principe de la fonction de synthèse du STC repose sur l'asservissement par une boucle à verrouillage de phase à 27 Mhz à partir des valeurs de PCR pour disposer en sortie des valeurs du STC d'origine au rythme de 27 Mhz.

A cet effet, et comme représenté à la figure 7, le signal PCR généré en sortie du sous-module SPCR est appliqué à une entrée d'un soustracteur SS dont la sortie attaque un intégrateur INT dont la sortie attaque à son tour l'entrée de commande de phase d'une horloge à 27 Mhz verrouillée en phase. La sortie de cette horloge VCO incrémente un compteur CPTR. Le signal PCR est appliqué à l'entrée de chargement LD du compteur CPTR. A chaque occurrence du signal PCR, la valeur du compteur CPTR avant chargement est comparée à la valeur de PCR dans le soustracteur SS et le résultat de cette comparaison présent en sortie du soustracteur SS permet ledit asservissement en phase.

Le flux des valeurs du STC est trop important par rapport à la fréquence de mesure des analyseurs de qualité audio et vidéo. On met en oeuvre des marques temporelles référencées par rapport à la fréquence à laquelle on souhaite réaliser les mesures.

La cadence de variation des bits de poids faible est en général trop importante par rapport à la fréquence des mesures. En effet, ce bit b₀ de poids le plus faible change toutes les 37ns, le bit suivant b₁ change toutes les 74ns et ainsi de suite. Par conséquent, les bits de poids faible de ce compteur deviennent inutiles. Il est donc possible de ne conserver dans le signal MTS, par exemple HDT, que les bits qui sont nécessaires pour identifier les mesures.

Du côté des bits de poids faible, il suffit donc de conserver jusqu'au premier bit qui varie plus vite que la périodicité des mesures.

Du côté des bits de poids fort, il suffit de conserver un nombre de bits suffisant pour discriminer entre elles deux séries de mesures sur les mêmes données en tenant compte du temps T de propagation et de collationnement des données de mesure. Par exemple pour un temps T égal 3 secondes, on peut considérer qu'il suffit de conserver comme bit de poids fort le bit b₂₈ qui varie toutes les 5,8 sec. L'étiquetage s'effectue par exemple en conservant les bits b₂₅ à b₂₈.

Le signal MTS sert à piloter les équipements de mesure de la qualité des signaux audio et/ou vidéo d'autres appareils de métrologie de signaux MPEG2, en permettant de déclencher le processus de mesure et par la suite d'étiqueter ces mêmes mesures avec les valeurs de HDT. Cette opération permet avantageusement de comparer des mesures effectuées sur les mêmes données en divers points du réseau.

La présente invention est appplicable à des fins d'exploitation pour les équipements de métrologie et pour les systèmes de supervision des réseaux de distribution des signaux de télévision numérique. Une de ses caractéristiques avantageuses réside dans l'association des mesures effectuées sur les signaux du réseau avec une datation unifiée liée aux signaux audiovisuels. Une autre concerne l'extraction d'une horloge de référence à partir des données incluses dans le flux MPEG2.

Les moyens et dispositifs mis en oeuvre dans cette invention répondent favorablement aux besoins imposés dans les systèmes de gestion de la qualité de service.

## Revendications

1. Procédé de mesure de la qualité de signaux de télévision numérique comportant un flux de données, ledit procédé comportant la réalisation de mesure de qualité et la production de signaux de mesure représentatifs de la qualité d'au moins certaines des données du flux de données, comportant les étapes suivantes ;
a) sélectionner dans le flux de données un signal temporel de référence (PCR) ;
b) générer à partir du signal temporel de référence un signal d'horloge numérique multibits (STC') dont la phase est asservie à partir dudit signal temporel de référence (PCR) et dont le compte est déduit de manière univoque de celui d'une base temporelle (STC) générée lors de l'encodage initial des signaux de télévision numérique ;
c) étiqueter lesdits signaux de mesure à l'aide au moins de certains bits (HDT) du signal d'horloge numérique, significatifs pour la nature des mesures effectuées.

2. Procédé selon la revendication 1, dans lequel le compte du signal d'horloge numérique multibits (STC') est égal à celui de ladite base temporelle (STC).

3. Procédé selon une des revendications 1 ou 2, dans lequel l'étape a comporte les sous-étapes suivantes :
a₁) sélectionner dans le flux de données des trames numériques correspondant à des données vidéo associées à un programme ;
a₂) sélectionner dans les dites trames ledit signal temporel de référence.

4. Procédé selon la revendication 3, dans lequel les signaux de télévision numériques sont selon le standard MPEG-2 et en ce que, lors de l'étape a₁, la sélection des trames s'effectue à partir du champ PID.

5. Procédé selon une des revendications 3 ou 4, dans lequel les données vidéo sont celles pour lesquelles sont effectuées des mesures de qualité audio et/ou vidéo.

6. Procédé selon les revendications 4 et 5, comportant une étape de décodage des données vidéo à partir de trames sélectionnées à partir dudit champ PID.

7. Procédé selon une des revendications précédentes, dans lequel ladite sélection du signal temporel de référence s'effectue en testant un drapeau de présence dudit signal temporel de référence dans chaque trame considérée.

8. Procédé selon une des revendications précédentes, dans lequel les signaux de télévision numérique sont selon le standard MPEG-2 et en ce que le signal temporel de référence est choisi dans le groupe comportant le signal PCR, le signal SCR, le signal DTS et le signal PTS.

9. Procédé selon la revendication 8, dans lequel lors de l'étape b, ledit signal d'horloge numérique présente une fréquence de k x 27MHz, k étant un nombre entier ou fractionnaire non nul.

10. Système de la mesure de qualité des signaux dans un réseau de télévision numérique comportant une pluralité d'installations de transmission, comportant une pluralité d'équipements de mesure (EMS₁₁, EMS₁₃, EMS₂₁ ...), associés à au moins certaines installations de transmission (EM₁₁, EM₁₃, EM₂₁) et dont chacun comprend :
- un dispositif d'identification recevant à une entrée le flux de données et produisant en sortie un signal temporel de référence sélectionné dans le flux de données ;
- un générateur d'horloge dont la phase est asservie à partir dudit signal temporel de référence et produisant en sortie un signal d'horloge numérique multibits (STC') cadencé à une fréquence donnée et dont le compte est déduit de manière univoque de celui d'une base temporelle (STC) générée lors de l'encodage des signaux de télévision numérique ;
- un dispositif d'étiquetage des mesures de qualité à l'aide au moins de bits significatifs (HDT) du signal d'horloge numérique multibits (STC') ;
- un dispositif de transmission des mesures de qualité étiquetées ;
- et en ce qu'il comporte un récepteur (SUP) destiné à collecter des données de mesure étiquetées transmises par au moins un dit dispositif de transmission.

11. Système selon la revendication 10, dans lequel le compte du signal d'horloge numérique multibits est égal à celui de ladite base temporelle.

## Claims

1. A method of measuring the quality of digital television signals comprising a data stream, said method including measuring quality and producing measurement signals representative of the quality of at least some of the data of the data stream, and comprising the following steps:
a) selecting a reference time signal (PCR) from the data stream;
b) generating a multibit digital clock signal (STC') on the basis of the reference time signal, with the phase of the clock signal being locked on the basis of said reference time signal (PCR), and with the count thereof being deduced unambiguously from the count of a time base (STC) generated during initial encoding of the digital television signals; and
c) labelling said measurement signals using at least some of the bits (HDT) of the digital clock signal, that are meaningful given the nature of the measurements performed.

2. A method according to claim 1, in which the count of the multibit digital signal (STD') is equal to the count of said time base (STC).

3. A method according to claim 1 or 2, in which step a) comprises the following sub-steps:
a₁) selecting digital frames corresponding to video data associated with a program from said data stream; and
a₂) selecting said reference time signal from said frames.

4. A method according to claim 3, in which the digital television signals are in the MPEG-2 standard and in that, during step a₁), frames are selected on the basis of the PID field.

5. A method according to claim 3 or 4, in which the video data is the data on which audio and/or video quality measurements are performed.

6. A method according to claims 4 and 5, including a step of decoding video data from frames selected on the basis of said PID field.

7. A method according to any preceding claim, in which said selection of the reference time signal is performed by testing a flag indicating the presence of said reference time signal in each frame under consideration.

8. A method according to any preceding claim, in which the digital television signals are in the MPEG-2 standard, and in that the reference time signal is selected from the group comprising the signal PCR, the signal SCR, the signal DTS, and the signal PTS.

9. A method according to claim 8, in which, during step b), said digital clock signal is at a frequency of k x 27 MHz where k is a non-zero integer or fraction.

10. A system for measuring the quality of signals in a digital television network having a plurality of transmission installations, the system including a plurality of measurement equipments (EMS11, EMS13, EMS21 ...) associated with at least some of the transmission installations (EM11, EM13, EM21), and each of which comprises:
· an identifier device receiving the data stream as input and outputting a reference time signal selected from the data stream;
· a clock generator whose phase is locked on the basis of said reference time signal and which outputs a multibit digital clock signal (STC') operating at a given frequency, and whose count is deduced unambiguously form the count of a time base (STC) generated while encoding the digital television signals;
· a device for labelling quality measurements using at least the meaningful bits (HDT) of the multibit digital clock signal (STC'); and
· a device for transmitting the labelled quality measurements:
and in that it includes a receiver (SUP) for collecting the labelled measurement data transmitted by at least one of said transmission devices.

11. A system according to claim 10, in which the count of the multibit digital clock signal is equal to the count of said time base.

## Patentansprüche

1. Verfahren zum Messen der Qualität von Digitalfernsehsignalen mit einem Datenfluß, wobei das Verfahren die Durchführung einer Qualitätsmessung und die Erstellung von Meßsignalen, die für die Qualität von zumindest bestimmten der Daten des Datenflusses repräsentativ sind, beinhaltet, mit den folgenden Schritten:
a) Auswählen eines Bezugszeitsignals (PCR) im Datenfluß;
b) Erzeugen, ausgehend von dem Bezugszeitsignal, eines digitalen Multibit-Taktsignals (STC'), dessen Phase vom Bezugszeitsignal (PCR) abhängt und dessen Zählwert auf eindeutige Weise von demjenigen einer beim anfänglichen Codieren der Digitalfernsehsignale erzeugten Zeitbasis (STC) abgeleitet ist;
c) Etikettieren der Meßsignale mit Hilfe zumindest von bestimmten Bits (HDT) des digitalen Taktsignals, die für die Art der durchgeführten Messungen bezeichnend sind.

2. Verfahren nach Anspruch 1, bei dem der Zählwert des digitalen Multibit-Taktsignals (STC') gleich demjenigen der Zeitbasis (STC) ist.

3. Verfahren nach einem der Ansprüche 1 oder 2, bei dem Schritt a die folgenden Unterschritte aufweist:
a₁) Auswählen derjenigen digitalen Blöcke im Datenfluß, die den einem Programm zugeordneten Videodaten entsprechen;
a₂) Auswählen des Bezugszeitsignals in den Blöcken.

4. Verfahren nach Anspruch 3, bei dem die digitalen Fernsehsignale dem MPEG-2-Standard entsprechen und im Schritt a₁ die Auswahl der Blöcke ausgehend vom PID [Protocol Identification]-Feld durchgeführt wird.

5. Verfahren nach einem der Ansprüche 3 oder 4, bei dem die Videodaten diejenigen sind, an denen Audio- und/oder Videoqualitätsmessungen durchgeführt werden.

6. Verfahren nach den Ansprüchen 4 und 5, welches einen Schritt des Decodierens der Videodaten ausgehend von Blöcken aufweist, die ausgehend vom PID-Feld ausgewählt sind.

7. Verfahren nach einem der vorhergehenden Ansprüche, bei dem die Auswahl des Bezugszeitsignals durch Überprüfen eines Flags für das Vorhandensein des Bezugszeitsignals in jedem betrachteten Block durchgeführt wird.

8. Verfahren nach einem der vorhergehenden Ansprüche, bei dem die Digitalfernsehsignale dem MPEG-2-Standard entsprechen und das Bezugszeitsignal in der Gruppe ausgewählt wird, welche das PCR-Signal, das SCR-Signal, das DTS-Signal und das PTS-Signal beinhaltet.

9. Verfahren nach Anspruch 8, bei dem im Schritt b das digitale Taktsignal eine Frequenz von kx27 MHz besitzt, wobei k eine ganze Zahl oder eine Bruchzahl ist, die nicht gleich Null ist.

10. System zum Messen der Qualität von Signalen in einem Digitalfernsehnetz mit einer Mehrzahl von Sendeanlagen, welches eine Mehrzahl von Meßeinrichtungen (EMS₁₁, EMS₁₃, EMS₂₁ ...) aufweist, die zumindest bestimmten Sendeanlagen (EM₁₁, EM₁₃, EM₂₁ ...) zugeordnet sind und von denen jede aufweist:
- eine Identifikationsvorrichtung, welche an einem Eingang den Datenstrom empfängt und als Ausgang ein im Datenfluß ausgewähltes Bezugszeitsignal erstellt;
- einen Taktgenerator, dessen Phase vom Bezugszeitsignal abhängt und als Ausgang ein digitales Multibit-Taktsignal (STC') erstellt, das auf eine gegebene Frequenz getaktet ist und dessen Zählwert auf eindeutige Weise von demjenigen einer beim Codieren der Digitalfernsehsignale erzeugten Zeitbasis (STC) abgeleitet ist;
- eine Vorrichtung zum Etikettieren der Qualitätsmessungen mit Hilfe von zumindest bezeichnenden Bits (HDT) des digitalen Multibit-Taktsignals (STC');
- eine Vorrichtung zum Übertragen der etikettierten Qualitätsmessungen;
- wobei das System einen Empfänger (SUP) aufweist, der zum Sammeln der von mindestens einer solchen Übertragungsvorrichtung übertragenen, etikettierten Meßdaten vorgesehen ist.

11. System nach Anspruch 10, bei dem der Zählwert des digitalen Multibit-Taktsignals (STC') gleich demjenigen der Zeitbasis ist.
